# EUROPEAN PATENT APPLICATION

(11) **EP 2 221 538 A1**
(43) Date of publication of application: **25.08.2010**
(21) Application number: 10153856.9
(22) Date of filing: 17.02.2010
(51) Int. Cl.: F23J 15/04

(54) **Energy recovery device**

(30) Priority: 23.02.2009 IT TV20090024
(71) Applicant: Eberle, Giorgio, 31053 Pieve di Soligo (TV) (IT); Mazzega, Massimo, 31010 Fregona (TV) (IT)
(72) Inventor: Eberle, Giorgio, 31053 Pieve di Soligo (TV) (IT); Mazzega, Massimo, 31010 Fregona (TV) (IT)
(74) Representative: Modiano, Micaela Nadia

(57) **Abstract**

An energy recovery device (1) particularly for heating or industrial systems that entail the combustion of products, consisting of a tubular element (2), which is arranged at a flue or stack and has a coil (8) which is perforated along its extension. The coil has a delivery tube (10) for the water (11) for scrubbing the exhaust gases. The tubular element has an outlet (15) for collecting the treated water, which can be conveyed to a recuperator/heat exchanger. The device makes it possible to reduce the emission of particulates and pollutants into the environment and makes it possible to reduce the temperature of the exhaust gases besides allowing heat energy recovery.

## Description

The present invention relates to an energy recovery device.

Currently it is known that boilers are used for example to heat water for residential and industrial uses.

These boilers are supplied by means of fuels which, by burning, release exhaust gases which are expelled by means of stacks or flues.

The combustion that occurs inside boilers inherently produces particulates and pollutants whose amount can vary as a function of the fuel used.

Moreover, the use of these boilers requires considerable energy resources and has high costs for operation in addition to the drawback consisting in the release of a quantity of hot exhaust gases at high temperature into the environment, which gases still have heat energy that is dispersed into the environment, altering the surrounding bioclimate.

The aim of the present invention is to solve the above-mentioned technical problems, eliminating the drawbacks of the cited background art, by providing a device which makes it possible to reduce emissions of particulates and pollutants and to reduce the temperature of the exhaust gases released from flues and simultaneously recover part of the heat energy of the exhaust gases.

Within this aim, an object of the invention is to allow improvement of the energy balance of industrial heating systems by lowering their operating costs.

Another object is to obtain a device that is effective, structurally simple, has low manufacturing costs and can be provided with conventional known systems.

This aim and these objects, as well as others which will become better apparent hereinafter, are achieved by an energy recovery device,
**characterized in that** it comprises a tubular element, which is arranged at a portion of a flue or stack, provided internally with at least one coil, which is closed at one end and is perforated along its extension, provided with a duct for feeding water for scrubbing the exhaust gases, said tubular element having an outlet for collecting the treated water, which can be conveyed to a recuperator/heat exchanger.

Further characteristics and advantages of the invention will become better apparent from the following detailed description of a particular but not exclusive embodiment thereof, illustrated by way of non-limiting example in the accompanying drawings, wherein:

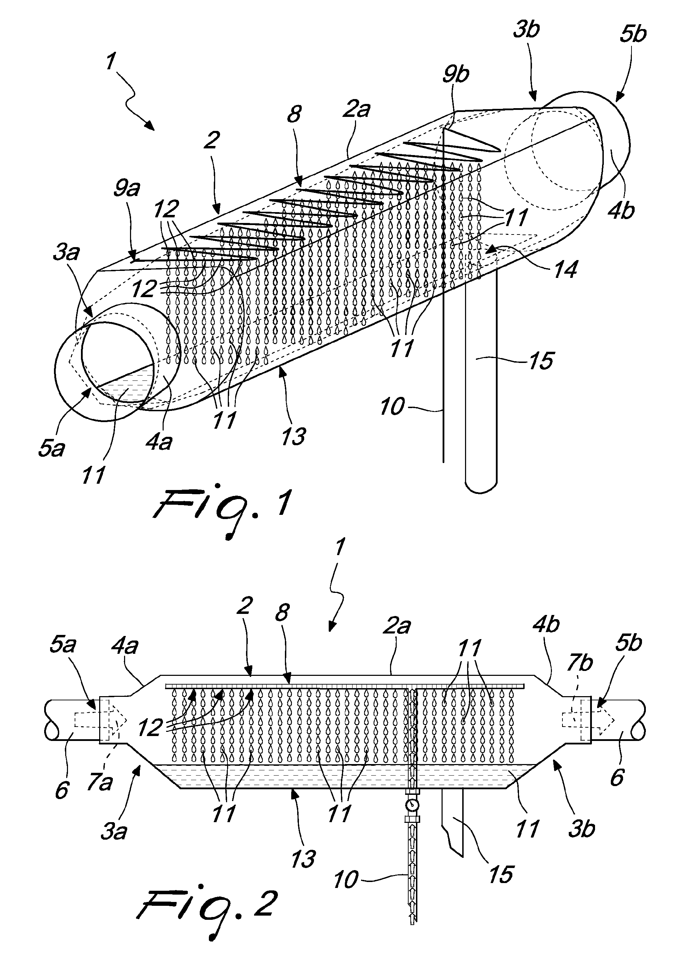

Figure 1 is a partially sectional perspective view of a device according to the invention in a horizontal layout;
Figure 2 is a partially sectional view of the device, taken along a diametrical plane;
Figure 3 is a partially sectional front view of the device arranged vertically.

In the exemplary embodiments that follow, individual characteristics, given in relation to specific examples, may actually be interchanged with other different characteristics that exist in other exemplary embodiments.

Moreover, it is noted that anything found to be already known during the patenting process is understood not to be claimed and to be the subject of a disclaimer.

With reference to the figures, the reference numeral 1 designates an energy recovery device, consisting of a hollow tubular element 2, which is elongated and preferably has a substantially cylindrical cross-section with a preferably flat top 2a, which has, proximately to a first end 3a and a second end 3b, a preferably frustum-shaped tapering portion 4a, 4b for connection to a first opening and a second opening 5a, 5b that have a preferably circular cross-section, respectively for inflow and outflow.

The first openings 5a, 5b are connected to a portion of a flue or stack, designated by the reference numeral 6, so that the flow of exhaust gases 7a that enters through the first opening 5a passes through all of the tubular element 2 and exits through the second opening 5b, providing processed exhaust gases 7b.

Inside the tubular element 2 there is at least one coil 8, which consists of at least one single tube arranged on a horizontal plane proximate to the top 2a.

The coil 8 has a third closed end 9a, which is arranged proximately to the first opening 5a, and a fourth end 9b, which is arranged proximately to the second opening 5b and is connected to a delivery tube 10 for the treatment water 11 used to scrub the exhaust gases that pass through the tubular element 2.

The water 11 that is present inside the coil 8 exits from a series of first holes 12 formed along the entire surface of such coil that is directed at least toward the bottom 13 of the tubular element 2. The position of the third and fourth ends 9a, 9b can be inverted as regards their arrangement.

Moreover, the tubular element 2 has, at the bottom 13 and preferably in a region that is adjacent to the second opening 5b, a second hole 14 with which an outlet 15 is associated so as to be able to convey the scrubbing water 11 to a recuperator/heat exchanger, which is not shown.

The operation of the device is as follows.

When the burner starts to operate, for example the burner of the boiler, the exhaust gases that originate from combustion are guided into the stack or flue, and along their path they pass through the device, which is preferably arranged horizontally, and are thus scrubbed before exiting into the atmosphere.

When the burner is turned on, a pump is in fact actuated which draws water 11 from the recuperator/heat exchanger and conveys it along the delivery tube 10 until it reaches the coil 8.

The water 11 flows through the coil, along its entire length, exiting through the first holes 12 arranged below said coil: a shower of drops is thus formed which, in falling, passes through the flow of exhaust gases that pass through the tubular element.

The amount of water used to spray the exhaust gases and the pressure of the exhaust gases are adjusted and balanced so as to avoid causing any problems of pressure or negative pressure to the combustion.

Moreover, the pump continues to operate and therefore draw water as long as the burner is operating: shutdown of the burner is in fact followed by the arresting of the pump within a few seconds.

More precisely, the water in this manner is able to lower the temperature of the exhaust gases, which is harmful for the environment and which without the device is approximately 70/90°C if it exits from condensation boilers and approximately 120/400°C if it exits from boilers which are of the non-condensing type or from ovens or dryers.

Further, the water is able to capture a substantial fraction of the suspended particulates, which are thus guided and conveyed with the treated water into the outlet to the recuperator/heat exchanger.

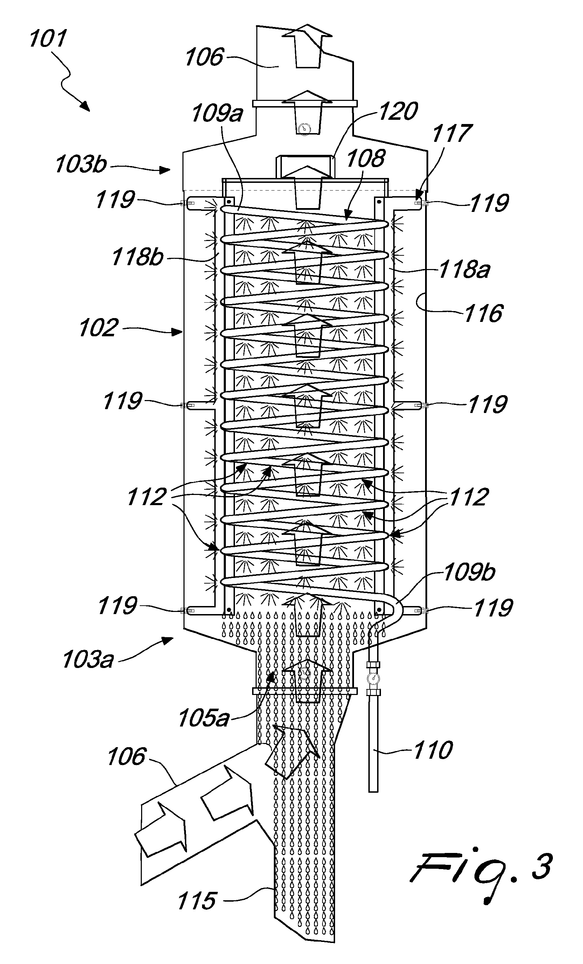

In another embodiment of the invention, shown in Figure 3, the device 101 is arranged vertically and the vertical tubular element 102 is interposed between the flue or stack 106.

Advantageously, the part of the flue 106 that is adjacent to the first opening 105a is arranged along an axis that is inclined with respect to the longitudinal axis of the tubular element 102.

The tubular element 102 is provided internally with at least one coil 108 consisting of at least one single tube and can be extracted, since the first and/or second ends 103a, 103b are removable.

The coil 108 extends inside the tubular element 102 until it approximately skims its internal lateral surface 116, forming a series of circular turns which are supported by a double comb-like locking means 117 composed of two pairs of linear flanges 118a, 118b, which lie opposite each other and have a series of seats for the placement and support of tube portions that constitute the coil 108.

The locking means 117 is fixed to the tubular element 102 by means of screws 119, which pass through suitable holes provided in said tubular element and, once unscrewed, allow the simultaneous extraction of the locking means 117 and of the coil 108 by means of a handle 120, which can be gripped by a user since it is arranged transversely at the upper end of the locking means 117.

The coil 108, closed at a third end 109a, has first holes 112 provided both on the surface directed toward the first end 105a and on the surface directed toward the inner lateral surface 116 of the tubular element 102.

The fourth end 109b is connected to a delivery tube 110 for the water used to scrub the exhaust gases, which enter through the first opening 105a.

As regards the outlet 115 of the water that filters the exhaust gases in countercurrent, it is arranged below, and contiguously to, the end of the flue 106 that is connected along an inclined axis to a port 106a adjacent the first opening 105a, so as to be arranged in axial alignment with the tubular element 102.

The operation of the invention is the same as the preceding one: in this embodiment, the shower of drops passes through the exhaust gases in countercurrent, scrubbing them and lowering their temperature, with a consequent rise of its own temperature.

Simultaneously, the film created by the water along the walls recovers the heat of the exhaust gases and captures and directs the dust particles that are present in the exhaust gases to the outlet of the device.

In practice it has been found that the invention has achieved the aim and objects cited above, a device having been obtained which, by scrubbing the exhaust gases, allows the elimination of a substantial fraction of the particulates and pollutants from said gases and at the same time allows a strong reduction in the output temperature of said exhaust gases, increasing the temperature of the scrubbing water, which can be conveyed to a recuperator/heat exchanger for heat recovery.

The materials used, as well as the dimensions that constitute the individual components of the invention, may of course be selected by the skilled person so as to be the most pertinent according to specific requirements.

The various means for performing certain different functions need not certainly coexist only in the illustrated embodiment but can be present per se in many embodiments, including embodiments that are not illustrated.

The characteristics indicated as advantageous, convenient or the like may also be omitted or be replaced with known equivalents, which will all be within the scope of the appended claims.

The disclosures in Italian Patent Application No. TV2009A000024 from which this application claims priority are incorporated herein by reference.

Where technical features mentioned in any claim are followed by reference signs, those reference signs have been included for the sole purpose of increasing the intelligibility of the claims and accordingly such reference signs do not have any limiting effect on the interpretation of each element identified by way of example by such reference signs.

## Claims

1. An energy recovery device (1), **characterized in that** it comprises a tubular element (2, 102), which is arranged at a portion of a flue or stack (6), provided internally with at least one coil (8, 108), which is closed at one end and is perforated along its extension, provided with a delivery tube (10) for feeding treatment water (11) for scrubbing the exhaust gases, said tubular element (2, 102) having an outlet (15, 115) for collecting the treatment water, which can be conveyed to a recuperator/heat exchanger.

2. The device according to claim 1, **characterized in that** said hollow tubular elongated element (2), preferably having a substantially cylindrical cross-section, has a top, preferably a flat top (2a) and, proximately to a first end and a second end (3a, 3b), has a tapered portion (4a, 4b), which is preferably frustum-shaped for connection to a first opening and a second opening (5a, 5b) having a preferably circular cross-section, respectively for inflow and outflow.

3. The device according to claim 2, **characterized in that** said openings (5a, 5b) are connected at a portion of a flue or stack (6), so that the flow of exhaust gases (7a) that enters through said first opening (5a) passes through all of said tubular element (2) and exits through said second opening (5b) as processed exhaust gases (7b).

4. The device according to claim 2, **characterized in that** said at least one coil (8) is provided inside said tubular element (2) and consists of at least one single tube that is arranged on a horizontal plane proximately to said top (2a), said coil (8) having a third closed end (9a), which is arranged proximately to said first opening (5a), and a fourth end (9b), which is arranged proximately to said second opening (5b), connected to a delivery tube (10) for water (11) used to scrub the exhaust gases that pass through said tubular element (2).

5. The device according to claim 4, **characterized in that** water (11) that is fed within said coil (8) exits from a series of first holes (12) formed along the entire surface directed at least toward a bottom (13) of said tubular element (2), said third and fourth ends (9a, 9b) being reversible in their arrangement.

6. The device according to claim 5, **characterized in that** said tubular element (2) has, at said bottom (13) and preferably in a region that is adjacent to said second opening (5b), a second hole (14), with which an outlet (15) is associated suitable to convey the water (11) to a recuperator/heat exchanger.

7. The device according to one or more of the claims 2-6, **characterized in that** the device (1) is arranged vertically with said tubular element (102), arranged also vertically and interposed between said flue or stack (106), the part thereof that is adjacent to said first opening (105a) being arranged along an axis that is inclined with respect to the longitudinal axis of said tubular element (102).

8. The device according to claim 7, **characterized in that** said tubular element (102) is provided internally with at least one coil (108), which consists of at least one single tube and which can be extracted from said tubular element (102), the first and/or second ends (103a, 103b) being removable, said coil (108) extending within said tubular element (102) until it skims the inner lateral surface (116) of the tubular element, forming a series of circular turns, which are supported by a locking means (117), said coil (108) being closed at a third end (109a) and having first holes (112) formed both on the surface that is directed toward said first end (103a) and on the surface that is directed toward said inner lateral surface (116) of said tubular element (102).

9. The device according to claim 8, **characterized in that** said fourth end (109b) is connected to a delivery tube (110) for the water used to scrub the exhaust gases that enter through said first opening (105a), an outlet (115) being provided for the water that filters the exhaust gases in countercurrent and is arranged below and contiguously to the end of said flue (106), which is connected, along an inclined axis, to said first opening (105a), so as to be arranged in axial alignment with said tubular element (102).
